# EUROPEAN PATENT APPLICATION

(11) **EP 1 589 390 A1**
(43) Date of publication of application: **26.10.2005**
(21) Application number: 05252441.0
(22) Date of filing: 19.04.2005
(51) Int. Cl.: G05B 19/408

(54) **Numerical controller with function of selecting spindle**

(30) Priority: 21.04.2004 JP 2004125373
(71) Applicant: FANUC LTD, Minamitsuru-gun, Yamanashi 401-0597 (JP)
(72) Inventor: Endo, Takahiko, Kokubunji-shi Tokyo 185-0005 (JP); Genma, Eiji, Minamitsuru-gun Yamanashi 401-0310 (JP); Kurokawa, Takashi FANUC Dai3virakaramatsu, Minamitsuru-gun Yamanashi 401-0511 (JP); Ito, Motohiko FANUC Dai3virakaramatsu, Minamitsuru-gun Yamanashi 401-0511 (JP)
(74) Representative: Billington, Lawrence Emlyn

(57) **Abstract**

A numerical controller capable of easily selecting and designating a spindle to be controlled according to a command for the spindle. A spindle ID for designating a spindle to be controlled is given to be associated with a command for the spindle in a machining program. When an analysis/operation section reads the spindle ID, it transmits the commanded spindle ID to spindle selection processing. Then, the commanded spindle ID is collated with spindle ID parameter setting information to determine the spindle to be controlled and spindle control processing is connected to its corresponding one of the spindle control interfaces. Based on the command for the spindle, the spindle control processing is performed to control the selected spindle through the connected spindle interface. Feedback signals may be inputted and processed by spindle feedback signal processing in the same manner.

## Description

### BACKGROUND OF THE INVENTION

### 1. Field of the Invention

The present invention relates to a numerical controller for controlling a machine tool having a plurality of spindles.

### 2. Description of Related Art

In a numerical controller for controlling a machine tool having a plurality of spindles, the spindles are conventionally designated by S-codes or speed command codes for the spindles to which suffixes are attached so that the spindles to be controlled can be discriminated and selected. If there are three spindles, first, second, and third, for example, rotational speed commands for the first, second, and third spindles are given by S1 = 5000, S2 = 4000, and S3 = 3000, respectively. Thus, commands are issued to drive the first, second, and third spindles at 5,000 min⁻¹, 4,000 min⁻¹, and 3,000 min⁻¹, respectively (see JP 62-293307A).

Alternatively, G-codes are provided to settle the correspondence between the spindles and command systems. In this case, the spindles to be controlled are selected by issuing commands based on the G-codes before the issuance of the S-codes or spindle speed commands. For example, a spindle is selected according to a command G150P1Q2R3. The address P represents a main spindle, and the numerical value "1" that follows P represent a first spindle. The address Q represents a mill spindle, and the numerical value "2" that follows Q represent a second spindle. The address R represents a sub-spindle, and the numerical value "3" that follows R represent a third spindle. In response to this command, the first, second, and third spindles are selected as the main spindle, mill spindle, and sub-spindle, respectively. Such selection of spindles based on G-codes, addresses, and numerical values is generally known (see JP 9-73308A).

According to another known invention (JP 2843568B), signals for controlling connection and disconnection are provided between a numerical controller and spindles. In this case, an S-code command is issued to order the rotational speed after a spindle is selected by operating these signals using an M-code command and a ladder program.

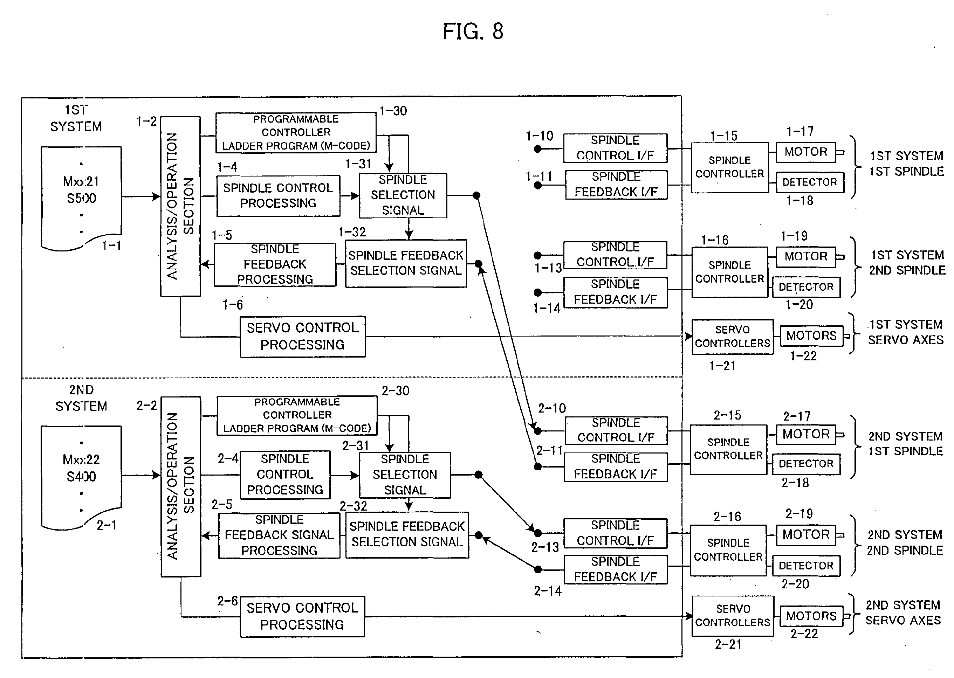

FIG. 8 is a system diagram of the numerical controller in which the spindle is selected by operating the signals in accordance with the ladder program. The example shown in FIG. 8 is provided with two systems, first and second. In the first system, an analysis/operation section 1-2 reads a command from a machining program 1-1. If the read command is an auxiliary function instruction (M-code) that orders each spindle to rotate forward, reverse, or stop, this auxiliary function instruction (M-code) is delivered directly to a programmable controller (hereinafter referred to as PC) 1-30. Based on the ladder program, the PC 1-30 uses the M-code to output a to-be-controlled spindle selection signal 1-31 and a spindle feedback selection signal 1-32, and connects with a spindle control interface and a spindle feedback interface. Since the selected spindle is the first spindle of the second system, as shown in FIG. 8, the first system is connected with a spindle control interface 2-10 and a spindle feedback interface 2-11. Since the second spindle of the second system is selected, moreover, the second system is connected with a spindle control interface 2-13 and a spindle feedback interface 2-14.

If the command read from the machining program 1-1 is a spindle command, e.g., a speed command (S-code), the spindle control processing 1-4 generates a spindle control command in response to the S-code speed command. This control command is delivered to spindle controllers (1-15, 1-16, 2-15, 2-16) through a spindle control interface for the selected spindle. Thereupon, spindle motors (1-17, 1-19, 2-17, 2-19) are driven. Further, spindle feedback signals detected by detectors (1-18, 1-20, 2-18, 2-20) for detecting the rotational speed of the selected spindle are fed back to the spindle feedback processing 1-5 through the spindle controllers and spindle feedback interfaces (1-11, 1-14, 2-11, 2-14). Data for per-revolution feed and an actual spindle speed are generated in the spindle feedback processing 1-5 and fed back to the analysis/operation section 1-2. If a move command for each feed axis or the like is read from the machining program 1-1, it is delivered to each of servo controllers by the servo control processing 1-6, whereupon a motor for each feed axis is driven. FIG. 8 shows only one set, a servo controller 1-21 and a feed-axis motor 1-22.

In the example shown in FIG. 8, the first spindle of the second system is selected by the machining program 1-1. In this case, the motor 2-17 for the first spindle of the second system is driven, and a spindle feedback signal for the spindle speed detected by the detector 2-18 is fed back to the spindle feedback processing 1-5 through the spindle controller 2-15 and the spindle feedback interface 2-11. Operation in the second system resembles the operation in the first system. FIG. 8 shows a state in which the second spindle of the second system is selected by the machining program 2-1.

In the conventional method described in JP 62-293307A, each spindle to be controlled is discriminated and selected by a suffixed S-code, which is followed by an equal sign and a rotational speed. In this case, the contents of a command are invisible or illegible if the number of digits of the suffixes is increased in proportion to the increase of the number of spindles or if the suffixes are given by character strings. If a command is given to one and the same spindle to change its speed continuously, a suffix and an equal sign must inevitably be described on each occasion. Besides, this program format is different from a program format of a conventional spindle speed command (S-code speed command, e.g., S1250;). If this method is used, therefore, all spindle commands in existing machining programs must be modified.

In the invention described in JP 9-73308A, moreover, the G-codes are provided to settle the correspondence between the spindles and command systems, and the spindles to be controlled are selected by the G-codes before the issuance of the S-codes. In this case, there is a problem of an increase in the amount of programs. Since the commands require more G-codes, moreover, the programs are illegible.

In the invention shown in FIG. 8 and described in JP 2843568B, the signals for controlling connection and disconnection are provided between the numerical controller and the spindles, and the spindle is selected by operating these signals using the M-code command and the ladder program. In this case, it is necessary to settle M-codes corresponding to spindles and prepare the ladder program for the selection of the spindle to be controlled and the feedback signal for the spindle by operating the aforesaid signals in accordance with the M-codes.

Usually, moreover, only figures can be ordered in M-codes, and character strings cannot be utilized. Conventionally, various numbers for other controls are used in the M-codes, so that an arbitrary number cannot be settled for the M-codes for selecting the spindles. Thus, there is a problem that the program for the spindle selection is intuitively unclear.

### SUMMARY OF THE INVENTION

The present invention provides a numerical controller capable of easily designating and controlling spindles of a machine tool having a plurality of spindles.

A numerical controller of the present invention includes one or more command systems for controlling a machine having a plurality of spindles. The numerical controller comprises: storage means storing setting information of identification parameters on the plurality of spindles; and selecting means for performing selection of a spindle to be controlled according to a command for the spindle in a machining program among the plurality of spindles, based on one of the identification parameters associated with the command for the spindle in the machining program and the setting information of the identification parameters stored in the storage means. With the above constitution, the spindle can be selected and designated using the identification parameters.

The one of the identification parameters associated with the command for the spindle may be stored as modal information. Further, the storage means may store default of the one of the identification parameters to be associated with the command for the spindle.

The numerical controller may further comprise means for performing controlling of the spindle selected by the selecting means according to the command for the spindle and means for performing the controlling using a feedback signal from the selected spindle.

According to the present invention, a spindle to be controlled can be selected in accordance with the identification parameters, so that it can be selected and controlled with ease.

### BRIEF DESCRIPTION OF THE DRAWINGS

FIG. 1 is a system diagram of a numerical controller according to one embodiment of the present invention;
FIG. 2 is a diagram for illustrating parameter setting examples of spindle ID's according to the embodiment;
FIGS. 3 a and 3b show examples of machining programs used in the device of the embodiment;
FIG. 4 is a flowchart showing setting recognition for the spindle ID's in the embodiment;
FIG. 5 is a flowchart showing spindle selection and spindle speed command processing based on the machining programs of the embodiment;
FIG. 6 is a continuation of the flowchart of FIG. 5;
FIG. 7 is a diagram illustrating the machining programs and behaviors of spindles of the embodiment; and
FIG. 8 is a system diagram of a numerical controller in which a spindle is selected by operating signals in accordance with a conventional ladder program.

### DETAILED DESCRIPTION

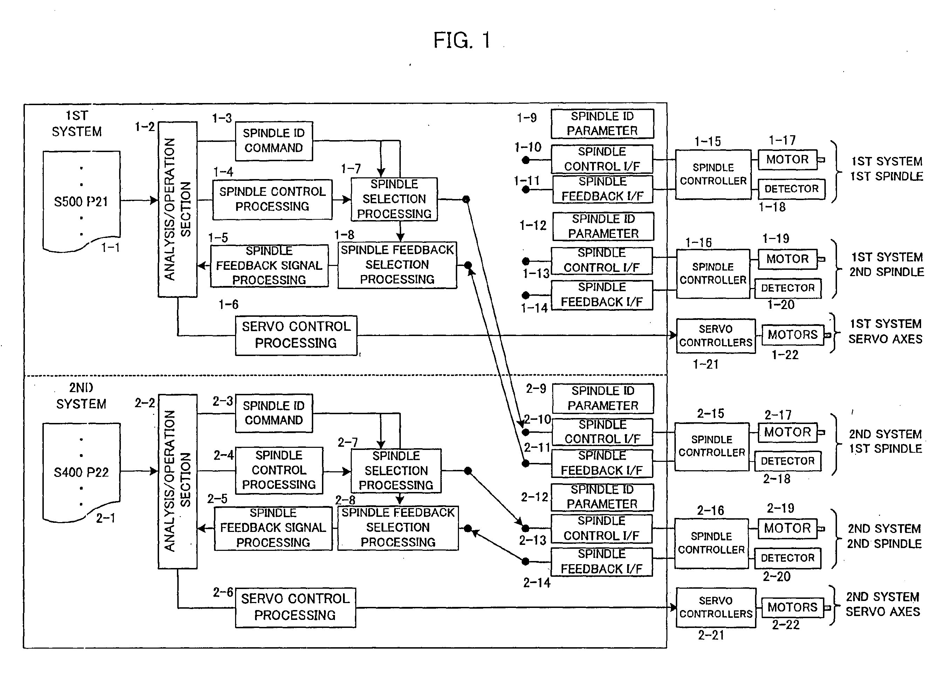

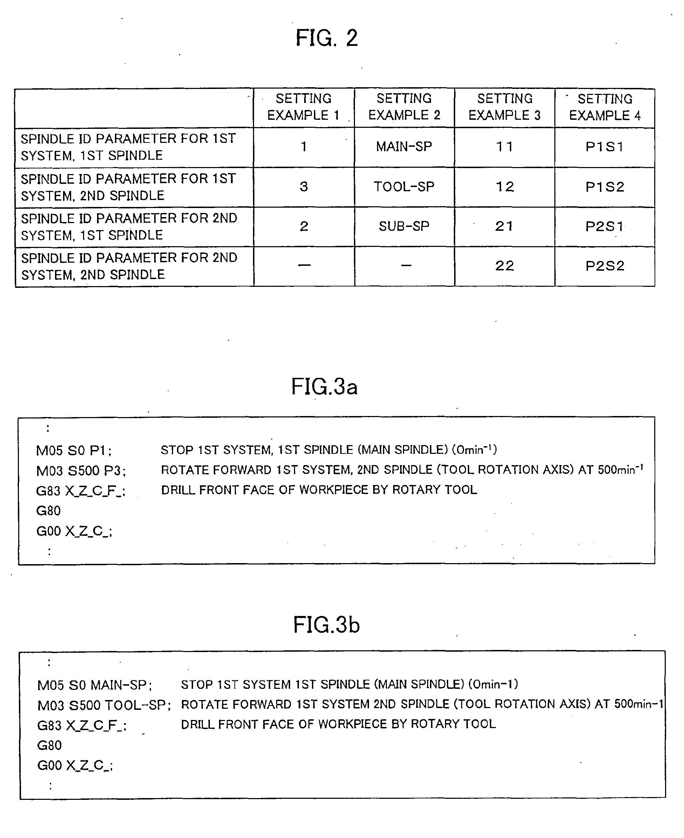

FIG. 1 is a system diagram of a numerical controller according to one embodiment of the present invention, FIG. 2 is a diagram for illustrating a case where spindle identification information data are set in parameters, and FIGS. 3 a and 3b show examples of machining programs according to the present embodiment.

In this embodiment, there is given an example of a numerical controller composed of two systems that have two spindles each, i.e., four spindles in total. Identification parameters (hereinafter referred to as spindle ID's) are defined and assigned for individual spindles using number(s) and/or character(s). Thus, the identification parameters and setting information on the identification parameters are set in advance by the parameter setting for designating the individual spindles. FIG. 2 shows four examples of parameter setting for the spindle ID's according to this embodiment. The spindle ID for designating each spindle is composed of a command address for designating the spindle and a number combined with the address or a character string that designate the spindle corresponding to a machine more clearly.

In a setting example 1 shown in FIG. 2, the address for designating spindles are set in combination with designation parameters for a machining program in which first and second spindles of a first system and a first spindle of a second system are used. The first spindle of the first system, the second spindle of the first system, and the first spindle of the second system are represented by [1], [3] and [2], respectively. In the setting example 1, only numerical values are set to be used in combination with the designation address. If a case where the numbers of the spindles are defined for the machine, such numbers may be set to allow an operator to easily recognize the relationship between the spindles of the machine and the spindle ID's.

In a setting example 2, on the other hand, the relationship with the spindles of the machine is directly seeable from numbers or character strings. The first spindle of the first system, the second spindle of the first system, and the first spindle of the second system are represented by MAIN-SP, TOOL-SP, and SUB-SP, respectively.

In setting examples 3 and 4, the spindle ID's are set for all the four spindles. In the setting example 3, the spindle ID's are combined with designation address. In the setting example 4, the spindle ID's are set so that the spindles are designated by numbers or character strings only. In the setting example 3, a first digit indicates the spindle number, and a second digit indicates the system, whereby each spindle of each system is designated. Thus, the relationship with the machine is intelligible. In the setting example 4, moreover, Pm and Sn (m, n: positive integer) designate the system and the spindle, respectively. For example, P1S1 represents the spindle ID for the first spindle of the first system, and the systems and spindles of the machine are seeable from the spindle ID's.

On the other hand, FIGS. 3a and 3b show examples of machining programs used in the present embodiment. In FIGS. 3 a and 3b, left-hand side parts represent the machining programs, and sentences on the right of them are explanatory notes for the contents of orders in the machining programs. In the example of the machining program shown in FIG. 3 a, parameters for the spindle ID's are set according to the setting example 1 of FIG. 2.

In a command "M05 S0 P1," P1 designates the first spindle of the first system with a command address P, S0 represents a rotational speed command of 0 for the spindle concerned, and M05 designates a spindle stop command. Further, a command "M03 S500 P3" represents a rotational speed command of 500 (S500) for the second spindle (P3) of the first system and forward rotation (M03).

In the example of the machining program shown in FIG. 3b, parameters for the spindle ID's are set according to the setting example 2 of FIG. 2. In this case, the same machining operation of FIG. 3a is performed. In FIG. 3b, the spindles are designated by directly set spindle ID's without using designation addresses. P1 and P3 in FIG. 3a replace MAIN-SP and TOOL-SP, respectively, and the spindles are designated according to the setting example 2 of FIG. 2.

In the machining programs according to the present invention shown in FIGS. 3a and 3b, compared with conventional machining programs, the spindle ID's that designate the spindles are added to S-codes for ordering spindle speeds and their respective set values. Thus, the conventional machining programs can be changed very easily.

Referring now to FIG. 1, there will be described an example of operation of the numerical controller, in which the spindle ID's shown in FIG. 2 are previously set in parameters and stored in storage means and the machining programs shown in FIGS. 3a and 3b are executed. The spindle ID parameters are supposed to be set according to the setting example 3 of FIG. 2. FIG. 1 shows a state in which commands "S500 P21" and "S400 P22" are read from a machining program 1-1 of the first system and a machining program 2-1 of the second system, respectively, and executed. In FIG. 1, like numerals are used to designate the same elements as those of the conventional example shown in FIG. 8.

An analysis/operation section 1-2 of the first system successively reads commands from the machining program 1-1 and analyzes them. If the commands are move commands for feed axes, the servo control processing 1-6 delivers a move command for each feed axis to each of servo controllers, whereupon a motor for each feed axis is driven. FIG. 1 shows only one set, a servo controller 1-21 and a feed-axis motor 1-22.

If the command "S500 P21" for the spindle is read and analyzed in the manner shown in FIG. 1, it is delivered to the spindle control processing 1-4. Further, P21 of a spindle ID command 1-3 extracted by analyzing this command is transmitted to the processing 1-7 for selecting a spindle to be controlled, and the spindle feedback selection processing 1-8. The selection processing 1-7 and 1-8 retrieve and collate the transmitted spindle ID and the spindle ID parameters set for the individual spindles, and select conformable spindles. In the example shown in FIG. 1, the spindle is designated by P21 in the machining program 1-1, so that the first spindle of the second system is selected.

In the spindle control processing 1-4, a spindle control command is generated in accordance with a speed command in an S-code. This control command is delivered to a spindle controller (2-15 in this example) through a spindle control interface (2-10 in this example) for the spindle selected in the spindle selection processing 1-7. Thereupon, a motor for the selected spindle is driven. In the example shown in FIG. 1, a motor 2-17 for the first spindle of the second system is driven. Further, a spindle feedback signal that is detected by a detector (2-18 in this example) for detecting the rotational speed of the spindle selected in the spindle feedback selection processing 1-8 is fed back to the spindle feedback signal processing 1-5 through each spindle controller (2-15 in this example) and a spindle feedback interface (2-11 in this example). Thereupon, data for per-revolution feed and an actual spindle speed are generated and fed back to the analysis/operation section 1-2.

The same operation processing is performed in the second system. In the example shown in FIG. 1, a spindle command "S400 P22" is issued from the machining program 2-1 of the second system, whereby the second spindle of the second system is designated. Thus, in the state shown in FIG. 1, the second spindle of the second system is selected and connected.

According to the present embodiment, moreover, the spindle ID command is able to use default setting and a modal function. Any of the spindle ID's is stored as default modal information when the numerical controller is started or reset. Thereafter, a newly ordered spindle ID is updated and stored as modal information in advance. If no spindle ID command is issued, the spindle ID stored as the modal information can be concluded to have been designated.

Based on these functions, the spindle ID command may be omitted. If the spindle ID command is omitted, the command format resembles the format of a speed command (S-code command) for a conventional spindle. If the present invention is applied to an existing machine tool, therefore, existing machining programs can be utilized without modification by setting a default for the spindle ID.

Further, a feedback signal for a spindle corresponding to the spindle ID concerned is inputted so that control such as per-revolution feed can be performed. More specifically, the numerical controller selects the spindle to be controlled or the spindle for which the feedback signal is to be used, thereby obviating the necessity of signal operation for the spindle selection. Thus, the burden of generating ladder programs for controlling the machine tool that has a plurality of spindles can be eased.

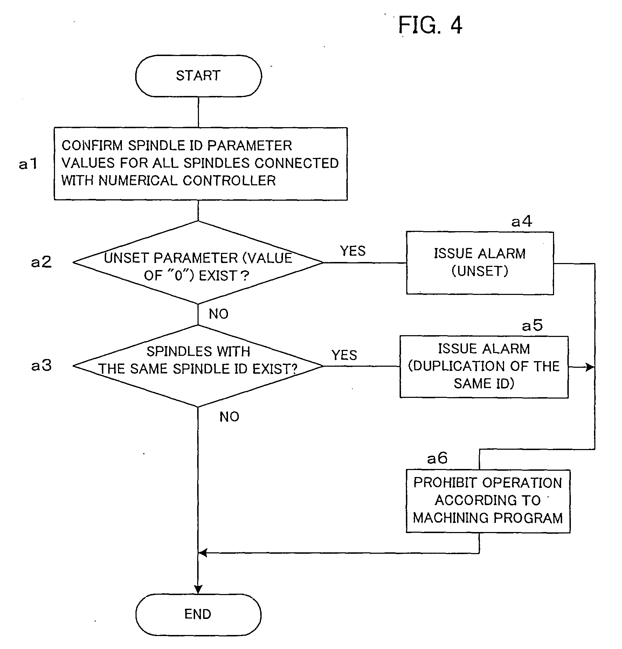

FIG. 4 shows processing that is executed when the numerical controller is started in order to check to see if the spindle ID setting involves no problems before device starts automatic operation.

First, a processor of the numerical controller confirms the respective values of the spindle ID parameters for all the connected spindles without regard to the system (Step a1). Whether or not there is any unset parameter (of a value "0") is determined (Step a2). If it is concluded that all the parameters are set, it is determined whether or not the same spindle ID is set to different spindles (Step a3). This processing is fmished if there are neither unset parameters nor duplicate spindle ID's.

If it is concluded in Step a2 that there is an unset parameter, on the other hand, an alarm that indicates the presence of the unset spindle ID is issued and displayed on an display device of the numerical controller (Step a4), and operation according to the machining program is prohibited (Step a6). If it is detected in Step a3 that the same spindle ID is set to different spindles, an alarm is also issued and displayed on the display device to indicate the duplication of the same ID (Step a5). Then, the procedure proceeds to Step a6, in which operation based on the machining programs is prohibited.

If no spindle ID's are set, in this embodiment, the alarm is issued in Step a4 to prohibit operation based on the machining programs. If there are any spindles that are not directly controlled, depending on the machining programs, however, the processes of Steps a2 and a4 are omitted in order to allow operation based on the machining programs. If there is an unset parameter, in this case, operation based on the machining programs can be allowed.

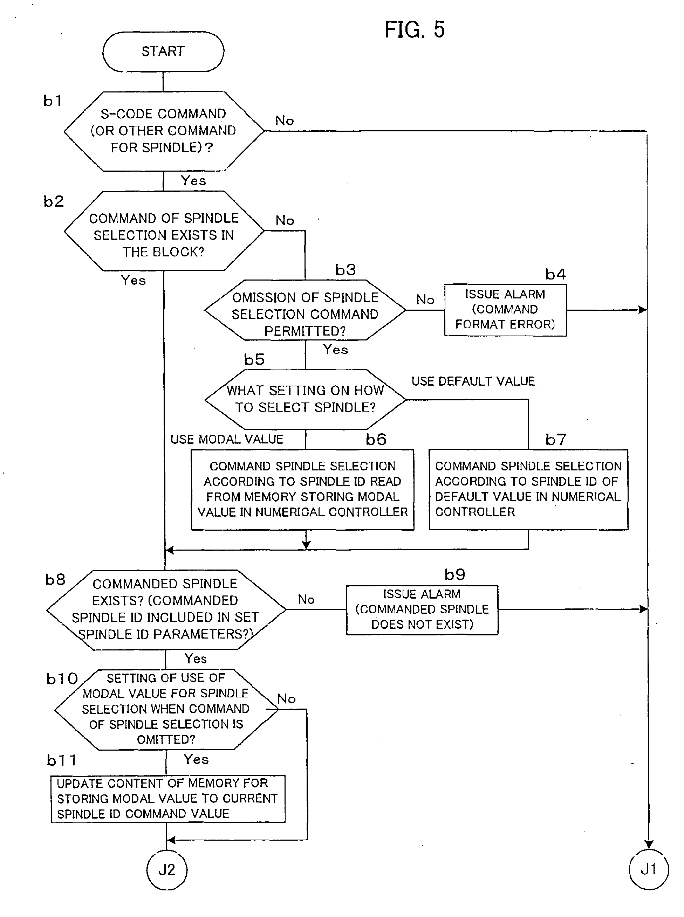

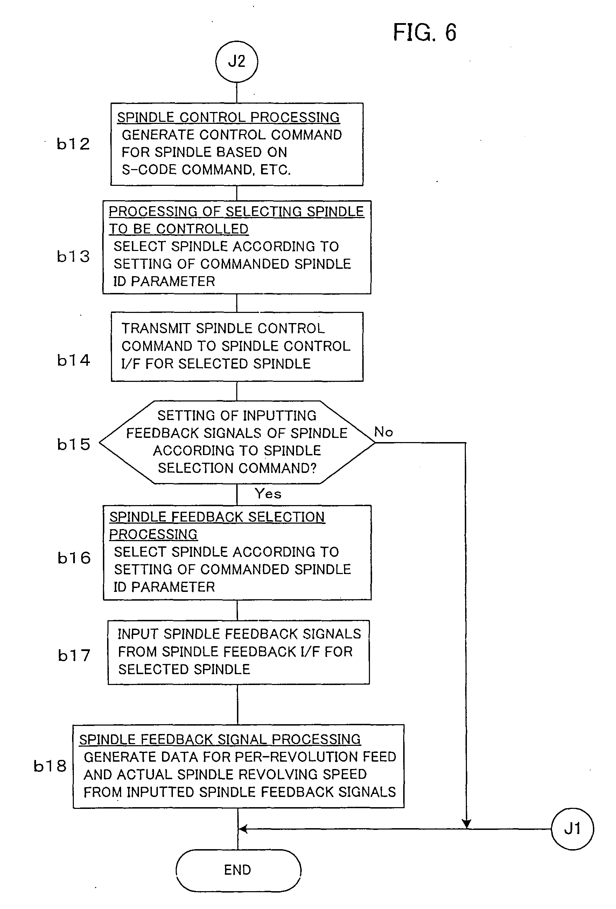

FIGS. 5 and 6 are flowcharts showing spindle selection and spindle speed command processing based on the machining programs. Other commands from the machining programs are issued in the same manner as in the conventional case, so that a description of the issuance of those commands is omitted. If no spindle selection command is issued despite the issuance of a speed command (S-code command), according to this embodiment, any of the following three unset spindle processing modes can be established alternatively:
(A) issuance of an alarm,
(B) designation of a default value, and
(C) adjustment of a spindle selection command to a modal value and designation of a finally ordered spindle selection command value.

The mode (A) is suited for the case where errors in the generation of the machining programs are prevented and safety is emphasized. The modes (B) and (C) are suited for the case where existing machining programs are to be directly used despite addition of spindles to an existing machine or the amount of machining programs should be minimized. If the mode (B) is established, the default value is separately set in advance as a parameter. If the mode (C) is established, an initial value of the modal value is separately set in advance as a parameter.

After the unset spindle processing modes are established in this manner, operation based on the machining programs is started.

The processor of the numerical controller reads commands successively from the machining programs, and determines whether or not the read command is a command for the spindle (Step b1). More specifically, it is determined whether or not a velocity command for the spindle by an S-code or other command for the spindle (a command for stopping the spindle at a specified position as a spindle orientation command or an M-code command for rotating the spindle at a constant speed for gear change or the like) is issued. If no command for the spindle is issued, the program terminates without execution of processing for the spindle. If the read command is not a command for the spindle, processing is executed in the same manner as in the conventional case. Since this processing is not directly associated with the present invention, it is not shown in FIG. 5.

If the read command is a command (S-code command or the like) for the spindle, it is determined whether or not a command of a spindle selection is issued in the same block of the read command (Step b2). If the command for spindle selection is issued, the procedure proceeds to Step b8. If not, it is determined whether the unset spindle processing mode is set as (A), (B) or (C) (Steps b3 and b5). If omission of the spindle selection command is not permitted in the mode (A), an alarm is issued to indicate an error in the command format (selection of no spindle) or the like on the display device of the numerical controller (Step b4).

If the mode (C) is established so that the spindle is to be selected in a modal value, on the other hand, the spindle ID is read from a memory that stores the modal value for spindle selection in the numerical controller, and a command is issued to select the spindle corresponding to the read spindle ID (Step b6). If the mode (B) is established so that the spindle corresponding to the default value is to be selected, moreover, the spindle ID of the default value in the numerical controller is read and adopted as a spindle selection command (Step b7). Then, the procedure proceeds to Step b8.

In Step b8, it is determined whether or not the commanded spindle ID is included in the all set spindle ID parameters. If not, an alarm is outputted, and this processing is finished (Step b9). If the designated spindle ID is present in the set parameters, it is determined whether or not the unset spindle processing mode is the mode (C) in which the modal value is to be used for the spindle ID command (Step b10). If the modal value setting in the mode (C) is performed, the memory for storing the modal value is updated to the spindle ID currently selected (Step b11).

Then, a spindle control command is generated based on the spindle command (S-code command or the like) (Step b12). Further, the spindle identified by the commanded spindle ID parameter is selected (Step b13), and the control command generated in Step b12 is delivered to a spindle interface of the selected spindle (Step b14).

Subsequently, it is determined whether or not to input the feedback signals from the speed detector on the spindle according to the spindle selection command (Step b15). In this embodiment, the feedback signal may be inputted from the spindle that is selected in response to the spindle selection command or kept from being changed without regard to the spindle selection command. This alternative is determined in Step b15. The processing of Step b15 may be omitted if the feedback signal also never fails to follow the spindle selection command.

If the feedback signal is not set to follow the spindle selection command, this processing terminates. If it is set that the input of the feedback signal is to follow the spindle selection commend, the spindle is selected according to setting of the commanded spindle ID parameter (Step b16), and a feedback signal is inputted from a spindle feedback interface of the selected spindle (Step b17). Data for per-revolution feed and actual spindle revolving speed data are generated from the inputted spindle feedback signals (Step b18). Thereupon, this spindle processing is terminated.

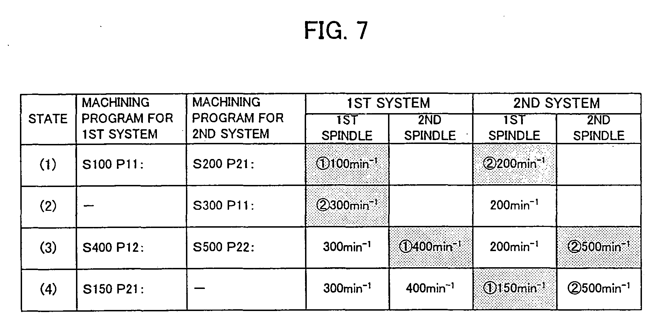

FIG. 7 is a diagram illustrating the machining programs and behaviors of the individual spindles. In a state (1), the first spindle of the first system is selected according to the machining program for the first system, and its spindle speed command is given by 100 min⁻¹. The first spindle of the second system is selected according to the machining program for the second system, and its spindle speed command is given by 200 min⁻¹. Each selected spindle is shown to be rotating at a command speed. The spindle ID that represents the selected spindle is based on the setting example 3 shown in FIG. 2.

In a state (2), the machining program for the second system is changed from the selection of the first spindle (P21) of the second system to the selection of the first spindle of the first system. This new command is validated, and its spindle speed command is designated as 300 min⁻¹. The first spindle of the first system rotates at 300 min⁻¹, while the first spindle of the second system that is not selected maintains its existing rotational speed.

In a state (3), "S400 P12" is ordered in the machining program for the first system, and "S500 P22" is ordered in the machining program for the second system. Thus, the second spindle of the first system rotates at 400 min⁻¹, while the second spindle of the second system rotates at 500 min⁻¹. Further, the respective first spindles of the first and second systems that are not selected maintain their existing rotational speeds.

In a state (4), "S 150 P21" is ordered in the machining program for the first system, so that the first spindle of the second system rotates at 150 min⁻¹. The first and second spindles of the first system that are not selected maintain their existing rotational speeds, and the second spindle of the second system maintains the rotational speed of 500 min⁻¹ that is ordered in the state (3).

In this manner, the selected spindle is controlled by the spindle ID or identification information data for identifying the spindle.

## Claims

1. A numerical controller including one or more command systems for controlling a machine having a plurality of spindles, comprising:
storage means storing setting information of identification parameters on the plurality of spindles; and
selecting means for performing selection of a spindle to be controlled according to a command for the spindle in a machining program among the plurality of spindles, based on one of the identification parameters associated with the command for the spindle in the machining program and the setting information of the identification parameters stored in said storage means.

2. A numerical controller according to claim 1, wherein the one of the identification parameters associated with the command for the spindle is stored as modal information.

3. A numerical controller according to claim 1, wherein said storage means stores default of the identification parameters to be associated with the command for the spindle.

4. A numerical controller according to claim 1, further comprising means for performing controlling of the spindle selected by said selecting means according to the command for the spindle and means for performing the controlling using a feedback signal from the selected spindle.
